# FASCICULE DE BREVET EUROPEEN

(11) **EP 0 665 048 B1**
(45) Date de publication et mention de la délivrance du brevet: **04.08.1999**
(21) Numéro de dépôt: 95400172.3
(22) Date de dépôt: 26.01.1995
(51) Int. Cl.: B01D 53/94, B01J 23/89

(54) **Procédé de traitement des gaz d'échappement des moteurs à combustion interne à allumage par compression**
Verfahren zur Behandlung von Verbrennungsmotorabgas von Selbstzündmotoren
Process for treating exhaust gas from internal combustion auto-ignition engines

(30) Priorité: 31.01.1994 FR 9401125
(43) Date de publication de la demande: 02.08.1995
(73) Titulaire: INSTITUT FRANCAIS DU PETROLE, 92502 Rueil-Malmaison (FR)
(72) Inventeur: Durand, Daniel, F-92500 Rueil Malmaison (FR); Guibard, Isabelle, F-92500 Rueil Malmaison (FR); Mabilon, Gil, F-78420 Carrieres sur Seine (FR); des Courtils, Nicolas, F-92380 Garches (FR)

(56) Documents cités:
- EP-A- 0 027 069
- EP-A- 0 126 676
- EP-A- 0 170 588
- EP-A- 0 313 434
- EP-A- 0 559 021
- DE-A- 3 223 500

## Description

La présente invention concerne un procédé pour le traitement des gaz d'échappement de moteur à combustion interne à allumage par compression.

Ces gaz d'échappement contiennent du monoxyde de carbone, des hydrocarbures imbrûlés, des oxydes d'azote, et des particules, qui sont considérées comme des polluants pour l'environnement.

Les particules présentes dans les gaz d'échappement sont constituées d'un squelette carboné (nommée également suie) sur lequel un certain nombre d'autres composés sont adsorbés: des hydrocarbures à haut poids moléculaire constituant la fraction dite soluble, des sulfates, de l'acide sulfurique, de la vapeur d'eau et divers composés métalliques.

Les émissions de polluants et plus particulièrement de particules dépendent fortement du type de moteur (moteur à allumage commandé, à allumage par compression, à injection directe, à préchambre...) et de ses conditions de fonctionnement (en particulier de la température à l'échappement).

Dans le cas des moteurs à allumage par compression pour véhicules légers, les températures des gaz d'échappement lors de l'évaluation sur cycle européen normalisé, sont relativement faibles, entre 100 et 300°C, mais, pour les moteurs de poids lourds (moteurs Diesel à injection directe), elles atteignent des niveaux plus élevées (jusqu'à 600°C) sur certains points de fonctionnement du cycle européen normalisé R 49. De plus, même pour les moteurs de véhicules légers fonctionnant en conditions réelles, les températures à l'échappement peuvent atteindre également 600-700°C.

Pour limiter les émissions de ces polluants, différents moyens peuvent être mis en oeuvre et installés sur la ligne d'échappement des catalyseurs permettant de promouvoir l'oxydation du monoxyde de carbone, des hydrocarbures imbrûlés et des particules et, dans certains cas, de réduire les oxydes d'azote; et des filtres à particules utilisés plus particulièrement dans le cas des moteurs à allumage par compression.

Ces catalyseurs, bien connus de l'homme de l'art, sont généralement préparés à partir d'un support de type monolithique, en céramique ou en métal, sur lequel on dépose une fine couche d'un ou plusieurs oxydes réfractaires, généralement de l'alumine, de surface et de porosité nettement supérieures à celles du substrat monolithique. Sur cet oxyde, est dispersée la phase métallique active composée essentiellement des métaux du groupe du platine (Pt, Rh, Pd, Os, Ru, Ir).

Ces catalyseurs subissent des conditions sévères de fonctionnement, ce qui conduit à une désactivation au cours du temps. Nombre de brevets revendiquent une limitation de cette perte d'activité par ajout au catalyseur, par exemple, d'autres oxydes tels que des oxydes de terres rares, de métaux alcalins ou alcalino-terreux.

Ainsi, comme cela est décrit dans les documents EP-B- 27 069 et EP-A-0126676, dans le cas de moteurs à allumage commandé, l'adjonction de cérium et de fer à un catalyseur constitué de métaux du groupe du platine déposés sur un oxyde inorganique réfractaire permet d'accroître sa stabilité thermique et sa résistance au vieillissement au cours du temps.

Dans le cas des moteurs à allumage par compression, des catalyseurs dits d'oxydation permettent de réduire les émissions de monoxyde de carbone, d'hydrocarbures et de particules. Ce type de catalyseurs décrit entre autres dans les demandes EP-A- 432 534, 462 593, 315 896 et 174 495, comprend des métaux du groupe du platine, et plus particulièrement le platine lui même, déposé sur un oxyde inorganique réfractaire comme l'alumine, la silice, les silices-alumines ou l'oxyde de titane. D'autres oxydes peuvent être ajoutés afin de promouvoir certaines réactions et d'augmenter la stabilité thermique.

En ce qui concerne la réduction des émissions de particules, des filtres peuvent être également installés dans la ligne d'échappement. L'utilisation de filtres catalysés permet d'effectuer la régénération in situ, c'est à dire à des températures plus faibles que celles nécessaires à la combustion des suies en l'absence de phase catalytique. Les brevets US-A- 4 849 339, 4 510 265 et 5 100 632 illustrent l'état de l'art sur ces filtres catalysés. Ces dispositifs, comme les catalyseurs d'oxydation, comportent généralement une couche d'oxyde réfractaire sur laquelle est déposé un ou des métaux du groupe du platine.

Les catalyseurs décrits dans l'art antérieur, permettant de réduire la pollution due au moteur à combustion interne, contiennent généralement du platine et/ou un métal du groupe du platine à des concentrations comprises entre 0,2 et 10 g de métaux par volume en litre de catalyseur.

On connaît par ailleurs la demande internationale WO 93 10886 dans laquelle les catalyseurs d'oxydation utilisés pour traiter notamment les gaz d'échappement des moteurs Diesel comprennent un support revêtu d'une couche poreuse de cérium et d'alumine, l'élément catalytique déposé étant le platine, à une teneur de 0,1 à 5 g/pied cube (soit d'environ 3,53 à environ 176,5 g/cm³).

Les propriétés de tels catalyseurs peuvent être améliorées et c'est un des objets de la présente invention.

L'activité catalytique importante des métaux nobles et plus particulièrement du platine dans les réactions d'oxydation permet de diminuer très fortement les émissions de monoxyde de carbone et d'hydrocarbures, mais présente l'inconvénient de favoriser l'oxydation du dioxyde de soufre présent dans les gaz d'échappement, surtout dans le cas des moteurs à allumage par compression. Le trioxyde de soufre SO₃ ainsi formé peut soit se combiner avec des molécules d'eau pour produire de l'acide sulfurique, qui pourra se condenser sur les particules ou sur le filtre de mesure des émissions de particules; soit réagir avec le support du catalyseur (alumine, oxyde de titane, etc...) pour former des sulfates qui à haute température se décomposeront et conduiront alors à une augmentation des émissions de particules. Ces phénomènes entraînent par conséquent une augmentation de la masse des particules émises par le moteur.

Les formulations catalytiques mises en oeuvre dans la dépollution des moteurs à combustion interne et plus particulièrement dans le cas des moteurs à allumage par compression doivent ainsi:
· permettre l'oxydation du monoxyde de carbone, des hydrocarbures imbrûlés et des particules dans les conditions de fonctionnement du moteur (c'est à dire aux températures les plus faibles possibles);
· éviter la formation de sulfates et de sulfites par oxydation du dioxyde de soufre; et
· être stables thermiquement et résister au vieillissement.

La demanderesse a trouvé, de façon surprenante, que des catalyseurs contenant à la fois du fer et du cérium et de faibles teneurs en platine ont une activité suffisante en oxydation du monoxyde de carbone et des hydrocarbures et permettent de limiter l'augmentation de la masse des particules à haute température due à l'oxydation du dioxyde de soufre.

La présente invention concerne donc un procédé utilisant un catalyseur comprenant un support contenant une couche poreuse qui comprend elle-même au moins un oxyde réfractaire inorganique et une phase active comprenant au moins du cérium, du fer et du platine. Selon l'invention, la couche poreuse comprend en général en pourcentage poids :
- 0,3 à 4,4% de cérium ;
- 0,1 à 3,5 % de fer ; et
- 0,0003 à 0,04% de platine ; et
- le complément à 100 % d'au moins un oxyde inorganique réfractaire.

De manière avantageuse, ladite couche poreuse comprend en pourcentage poids :
- 0,3 à 4,4 % de cérium ;
- 0,5 à 2% de fer ; et
- 0,0035 à 0,03 % de platine ; et
- le complément à 100 % d'au moins un oxyde inorganique réfractaire.

La diminution de la teneur en platine de ces catalyseurs par rapport à ceux de l'art antérieur permet de limiter l'oxydation du dioxyde de soufre tout en conservant une activité suffisante en oxydation des différents polluants.

La présence de cérium et de fer déposés simultanément sur le ou les oxydes inorganiques réfractaires permet de renforcer l'activité et la stabilité du catalyseur au cours du temps et de limiter de façon surprenante l'oxydation du dioxyde de soufre.

L'invention propose d'utiliser comme support des billes ou des extrudés en alumine sur lesquels sont déposés au moins du cérium et du fer et du platine. Dans ce cas, la composition du support est la même que celle indiquée ci-dessus pour la couche poreuse.

L'invention propose également d'utiliser ces catalyseurs déposés sur divers substrats céramiques ou métalliques. Ces substrats peuvent être des monolithes, à structure cellulaire en céramique ou métallique (enroulement ou empilement de feuillards métalliques). D'autres substrats peuvent être mis en oeuvre, comme des monolithes composés par l'enchevêtrement ou le tissage de fibres métalliques, ou encore des mousses constituées de fibres de silice ou autres matériaux inorganiques réfractaires.

La préparation de catalyseurs déposés sur ces substrats consiste en une étape d'enduction au cours de laquelle le substrat est plongé dans une suspension contenant les constituants de la couche poreuse, puis séché et calciné après évacuation de l'excès de ladite suspension. Une deuxième étape dite d'imprégnation permet de déposer les métaux. Pour cela, on met en contact le substrat enduit avec une ou plusieurs solutions du ou des précurseurs des métaux actifs. Après avoir éventuellement égoutté, le substrat ainsi enduit et imprégné est séché et subit un traitement thermique.

Selon l'invention, l'ajout simultané ou séparé des oxydes de fer et de cérium, ou de leurs précurseurs, peut être réalisé à diverses étapes de la préparation des catalyseurs. Ils peuvent être introduits à l'état de pigment solide (oxydes, hydroxydes, carbonates, hydroxycarbonates, ou encore sels insolubles) et/ou de précurseurs solubles dans la suspension d'enduction, et/ou pré-imprégnés sur l'un des constituants de la suspension d'enduction, et/ou déposés sur la couche poreuse avant l'imprégnation du platine, et/ou coimprégnés avec le platine.

Les précurseurs du platine sont ceux classiquement utilisés pour la préparation des catalyseurs, en particulier les chlorures, les complexes chlorés ,les nitrates, les complexes amminés, les acétylacétonates. A titre d'exemples, on peut citer l'acide hexachloroplatinique, le chlorure de platine tétrammine et le dinitrodiammino platine.

L'oxyde inorganique réfractaire est généralement choisi dans le groupe formé par l'alumine alpha, l'alumine gamma, l'alumine delta, l'alumine êta, l'alumine thêta, l'alumine kappa, l'alumine khi, la silice, les silices-alumines, les zéolithes, l'oxyde de titane, la zircone et leurs mélanges en toutes proportions. On préfère utiliser des oxydes présentant des grandes surfaces spécifiques et en particulier l'alumine gamma.

Afin d'augmenter la stabilité thermique de ce ou ces oxydes, divers composés peuvent être incorporés à la couche poreuse, soit directement sous la forme de pigments oxydes, soit sous la forme de composés précurseurs d'oxydes.

L'alumine entrant dans la composition de la couche poreuse est préférentiellement une alumine de surface spécifique supérieure à 10 m²/g, par exemple à 20 à 250 m²/g et de volume poreux supérieur à 0,05 cm³/g, par exemple de 0,1 à 2 cm³/g.

Dans le cas où le support de catalyseur comprend un substrat céramique ou métallique, la quantité de couche poreuse comprenant au moins un oxyde inorganique réfractaire est en général exprimée par rapport au volume du substrat et est comprise entre 20 et 200 g par litre de substrat (catalyseur), de préférence entre 80 et 150g/l.

Selon la présente invention, la teneur en platine exprimée par volume de catalyseur (substrat) en litre est préférentiellement comprise entre 0,0007 et 0,08 g/l.

Les catalyseurs selon l'invention apportent des performances améliorées dans les domaines d'utilisation ci-après:
- catalyse d'oxydation pour le traitement des gaz d'échappement des moteurs à allumage par compression; et
- plus particulièrement catalyse d'oxydation pour le traitement des gaz d'échappement des moteurs de véhicules utilitaires de masse totale hors charge supérieure ou égale à 3,5 tonnes.

Les exemples suivants illustrent l'invention.

### EXEMPLE 1

On dépose du fer et du cérium sur de l'alumine gamma par imprégnation de 700 g d'alumine par une solution de nitrate céreux et de nitrate ferrique. Cette solution contient l'équivalent de 40 g d'oxyde de cérium (CeO₂) et de 13g d'oxyde de fer (Fe₂O₃).

L'alumine imprégnée est ensuite séchée à 150°C puis calcinée 3 h à 500°C et broyée.

On prépare une suspension d'enduction à partir de 2 litres d'eau désionisée, additionnée de l'équivalent de 12g d'acide nitrique, 600g de l'alumine gamma préalablement imprégnée de fer et de cérium et de 95g de pseudo-boehmite à 72% en poids de matière séche. Cette suspension est broyée de telle manière que la taille des particules soit inférieure à 10 microns.

Dans une première étape dite d'enduction, un monolithe céramique (cordièrite) de 0,84 litre présentant 62 cellules par cm² est immergé dans la suspension, puis égoutté, l'excès de suspension est éliminé par soufflage. Le support est ensuite séché, puis calciné dans un four dont la température est maintenue à 600°C pendant 2 heures. Ces étapes d'immersion, soufflage et calcination sont répétées une deuxième fois afin de déposer l'équivalent de 120 g de cette couche poreuse par litre de catalyseur (substrat).

Dans une seconde étape dite d'imprégnation, le monolithe enduit est immergé dans une solution de platine de telle manière que la quantité de platine fixée après séchage et calcination à 500°C pendant 2 heures soit de 0,035 g par litre de catalyseur.

La couche poreuse du catalyseur (C1) ainsi préparé contient en poids 4,09 % de cérium, 1,13 % de fer et 0,029% de platine.

### EXEMPLE 2

On procéde à l'enduction de 7 monolithes céramiques identiques selon la procédure de l'exemple 1. Dans une deuxième étape, 6 de ces monolithes recouverts d'une couche poreuse contenant 4,09 % de cérium et 1,13% de fer sont imprégnés par des solutions de sels de platine afin d'obtenir des catalyseurs présentant des teneurs en platine variant entre 0,018 et 2,8 g par litre de catalyseur (catalyseurs référencés C2,C3,C4,C5,C6 et C7). Ces teneurs en platine exprimées par rapport à la masse de couche poreuse déposée varient de 0,015 à 2,33%.

Un des 7 monolithes enduits n'est pas imprégné par une solution de platine (catalyseur C8).

La composition de ces catalyseurs est rappelée dans le tableau ci-dessous. Les teneurs en cérium et en fer sont exprimées en pourcentage massique par rapport à la masse de couche poreuse; la teneur en platine est exprimée à la fois par le pourcentage massique par rapport à la couche poreuse et par la quantité de métal en grammes rapportée au volume du monolithe.

| Référence | Teneur Ce (%) | Teneur Fe (%) | Teneur Pt (%) | Teneur Pt (g/l) |
|---|---|---|---|---|
| C1 | 4,09 | 1,13 | 0,029 | 0,035 |
| C2 | 4,09 | 1,13 | 0,015 | 0,018 |
| C3 | 4,09 | 1,13 | 0,058 | 0,07 |
| C4 | 4,09 | 1,13 | 0,145 | 0,175 |
| C5 | 4,09 | 1,13 | 0,29 | 0,35 |
| C6 | 4,09 | 1,13 | 1,175 | 1,41 |
| C7 | 4,09 | 1,13 | 2,33 | 2,8 |
| C8 | 4,09 | 1,13 | 0 | 0 |

### EXEMPLE 3 : Evaluation des catalyseurs sur test en laboratoire

Dans les catalyseurs préparés (références C1 à C8), on découpe des cylindres de 2,5 cm de diamètre et de 6 cm de long, dans le sens longitudinal des canaux. Leur volume est alors d'environ 30 cm³.

Ces échantillons sont testés sur un montage de laboratoire afin de déterminer leur comportement vis à vis de l'oxydation du monoxyde de carbone, du propylène et du dioxyde de soufre. Pour cela on fait passer sur le catalyseur un mélange gazeux contenant outre ces trois composés, du monoxyde d'azote, de la vapeur d'eau et de l'oxygène dilué dans de l'azote. La composition volumique du mélange est la suivante:
CO: 300 ppm
NO : 200 ppm
C₃H₆ : 100 ppm (équivalent méthane)
H₂O (vapeur) : 6 %
SO₂ : 20 ppm
O₂ : 10 %
N₂ : complément
Le débit horaire des gaz est 50 000 fois supérieur au volume du substrat (VVH = 50 000 h⁻¹).

On détermine au cours d'une montée en température, la conversion de chacun des trois composés polluants. La concentration en entrée et en sortie du catalyseur est déterminée par un analyseur à infra- rouge pour le monoxyde de carbone, par un détecteur à ionisation de flamme pour le propylène et par fluorescence ultra-violette pour le dioxyde de soufre.

Dans le tableau 1, les températures de demi-conversion (T₅₀ température pour laquelle la conversion est de 50%) et les conversions à 450°C de CO, C₃H₆ et de SO₂ ont été reportées.

Les conversions sont exprimées par la différence des concentrations amont -aval par rapport à la concentration en amont du catalyseur.

**TABLEAU 1**

| | Teneur en Pt (g/l) | Température de demi-conversion (°C) | | | Conversion à 450°C (%) | | |
|---|---|---|---|---|---|---|---|
| | | CO | C3H6 | SO2 | CO | C3H6 | SO2 |
| C1 | 0,035 | 335 | 352 | - | 96 | 95 | 28 |
| C2 | 0,018 | 430 | 460 | - | 60 | 46 | 20 |
| C3(*) | 0,07 | 288 | 302 | 445 | 99 | 97 | 52 |
| C4 (*) | 0,175 | 235 | 260 | 350 | 100 | 98 | 77 |
| C5 (*) | 0,35 | 195 | 223 | 226 | 100 | 100 | 98 |
| C6 (*) | 1,41 | 142 | 172 | 172 | 100 | 100 | 100 |
| C7 (*) | 2,8 | 140 | 154 | 154 | 100 | 100 | 100 |
| C8 (*) | 0 | - | 550 | - | 9 | 15 | 10 |

| | | | | | | | |
|---|---|---|---|---|---|---|---|
| (*) comparaison | | | | | | | |

Ces résultats mettent bien en évidence l'intérêt des catalyseurs préparés selon l'invention (catalyseurs C1, C2) avec de faibles teneurs en métaux qui permettent de limiter l'oxydation du SO₂ à haute température en conservant une activité élevée en oxydation du CO et du propylène.

### EXEMPLE 4

Une nouvelle suspension est préparée en mélangeant 600 g d'alumine de type gamma, 100g d'alumine sous la forme de pseudo-boehmite, 15 g d'acide nitrique dans 2 litres d'eau désionisée.

Un monolithe en céramique de 0,84 litre est enduit par cette suspension de façon à déposer 150 g par litre de couche poreuse.

Ce monolithe enduit est alors imprégné par une solution contenant du nitrate céreux et du nitrate ferrique correspondant à 2,5 g d'oxyde de cérium(CeO₂) et 2,8g d'oxyde de fer (Fe₂O₃). Il est ensuite séché à 150°C et calciné à 500°C pendant 2 heures.

On imprégne alors le monolithe par une solution de platine afin de déposer 0,035 g de platine par litre de catalyseur.

La couche poreuse de ce catalyseur (C9) contient en poids 1,55 % de cérium, 1,49 % de fer et 0,022 % de platine.

### EXEMPLE 5 (comparatif)

Un monolithe céramique de 0,84 l est enduit par une suspension d'alumine selon le procédé de l'exemple 4 de façon à déposer 150 g d'alumine par litre.

Ce monolithe est alors imprégné par une solution de nitrate ferrique correspondant à 2 g d'oxyde de fer (Fe₂O₃). Après séchage et calcination à 500°C pendant 2 heures, on procéde à l'imprégnation du platine afin de déposer l'équivalent de 0,035 g par litre de catalyseur.

La couche poreuse de ce catalyseur (C10) contient alors en poids 1,09 % de fer et 0,022 % de platine.

### EXEMPLE 6 (comparatif)

Un catalyseur est préparé selon la procédure de l'exemple 4, à l'exception que le monolithe enduit d'alumine est imprégné par une solution de nitrate céreux correspondant à 6,5 g d'oxyde de cérium (CeO₂), puis après calcination par une solution de platine.

La teneur en platine est de 0,035 g par litre de catalyseur.

La couche poreuse de ce catalyseur (C11) contient en poids 4 % de cérium et 0,022 % de platine.

### EXEMPLE 7 (comparatif)

Un monolithe céramique de 0,84 l est enduit d'alumine selon la procédure de l'exemple 4, mais on n'introduit dans la couche poreuse ni fer, ni cérium. La quantité d'alumine déposée est de 150 g par litre de catalyseur.

Ce monolithe est alors imprégné par une solution de platine afin de déposer 0,035 g de platine par litre de catalyseur (C12), soit 0,022 % en poids de platine.

### EXEMPLE 8 : Evaluation de catalyseurs sur tests en laboratoire

La procédure d'évaluation de l'exemple 3 est reprise afin de comparer les catalyseurs C1, C9, C10, C11 et C12 présentant des compositions de couche poreuse différentes.

Les résultats des tests présentés dans le tableau 2, permettent de mettre en évidence un effet de synergie entre le fer et le cérium qui conduit à une amélioration des conversions à haute température pour le monoxyde de carbone et le propylène alors que la conversion de SO₂ en SO₃ reste relativement faible.

**TABLEAU 2**

| Catalyseur | Teneur en Ce (%) | Teneur en Fe (%) | Tenuer en Pt (g/l) | Température de demi-conversion (°C) | | | Conversion à 450°C (%) | | |
|---|---|---|---|---|---|---|---|---|---|
| | | | | CO | C3H6 | SO2 | CO | C3H6 | SO2 |
| C1 | 4,09 | 1,13 | 0,035 | 335 | 352 | - | 96 | 95 | 28 |
| C9 | 1,55 | 1,49 | 0,035 | 341 | 360 | - | 93 | 93 | 30 |
| C10 (*) | 0 | 1,09 | 0,035 | 352 | 362 | | 87 | 91 | 38 |
| C11 (*) | 4 | 0 | 0,035 | 345 | 367 | 445 | 90 | 88 | 53 |
| C12 (*) | 0 | 0 | 0,035 | 354 | 368 | | 86 | 87 | 35 |

| | | | | | | | | | |
|---|---|---|---|---|---|---|---|---|---|
| (*) comparaison | | | | | | | | | |

### EXEMPLE 9 : Evaluation de catalyseurs après vieillissement

Une partie des catalyseurs testés dans les exemples 3 et 8 sont traités à 600°C sous air en présence de vapeur d'eau (6% en volume) et de SO₂ (20 ppm en volume) pendant 20 heures afin de simuler un vieillissement.

Les catalyseurs sont référencés C1-V, C6-V, C10-V, C11-V et C12-V. La procédure de tests mise en oeuvre dans les exemples 3 et 8 est alors utilisée pour comparer leurs performances catalytiques.

Le tableau 3 regroupe les résultats obtenus sur ces catalyseurs vieillis. Pour chaque catalyseur, les valeurs à l'état neuf sont reportées entre parenthèses. On observe d'après cette évaluation, une perte d'activité en oxydation du CO et de C₃H₆ plus faible pour un catalyseur contenant du fer et du cérium et peu de platine. La présence du fer et du cérium permet encore une fois de limiter l'oxydation du dioxyde de soufre.

**TABLEAU 3**

| Catalyseur | Teneur en Ce | Teneur en Fe | Teneur en Pt | Température de demi-conversion (°C) | | | Conversion à 450°C (%) | | |
|---|---|---|---|---|---|---|---|---|---|
| | | | | CO | C3H6 | SO2 | CO | C3H6 | SO2 |
| C1 -V | 4,09 | 1,13 | 0,035 | 378 (335) | 390 (352) | | 95 (96) | 93 (95) | 23 (28) |
| C6-V | 4,09 | 1,13 | 1,41 | 180 (142) | 202 (172) | 205 (172) | 100 (100) | 95 (100) | 95 (100) |
| C10-V (*) | 0 | 1,09 | 0,035 | 402 (352) | 406 (362) | | 84 (87) | 88 (91) | 34 (38) |
| C11-V (*) | 4 | 0 | 0,035 | 390 (345) | 407 (367) | 480 (445) | 87 (90) | 85 (88) | 47 (53) |
| C12-V (*) | 0 | 0 | 0,035 | 402 (354) | 416 (368) | | 81 (86) | 80 (87) | 30 (35) |

| | | | | | | | | | |
|---|---|---|---|---|---|---|---|---|---|
| ( ) état neuf | | | | | | | | | |
| (*) comparaison | | | | | | | | | |

### EXEMPLE 10

Un monolithe de 2,3 litres (d= 140 mm L = 150 mm) constitué par l'enroulement de feuillard métallique et présentant 62 cellules par cm², est préoxydé sous air à 950°C pendant 6 heures, puis immergé, à température ambiante, dans 8 litres de suspension renfermant les équivalents de 3 100g d'alumine, 160 g d'oxyde de cérium (CeO₂), 50 g d'oxyde de fer (Fe₂O₃) et 100 g d'acide nitrique. La procédure de préparation de cette suspension est identique à celle mise en oeuvre dans l'exemple 1. Le monolithe est ensuite égoutté et soufflé. Il est ensuite calciné dans un four à 600°C pendant 2 heures. Ces étapes sont répétées une deuxième fois afin de déposer l'équivalent de 120 g de cette couche poreuse par litre de monolithe (substrat).

Sur cette couche poreuse est imprégné par l'intermédiaire d'une solution renfermant un sel de platine, l'équivalent de 0,035 g de platine par litre de catalyseur. La couche poreuse de ce catalyseur (M1) contient en poids 3,9 % de cérium, 1,05% de fer et 0,029 % de platine.

### EXEMPLE 11 (comparatif)

L'exemple 10 est reproduit avec trois autres monolithes métalliques à l'exception près que les teneurs en platine de ces catalyseurs sont : 0,07g par litre (M2), 0,35 g/l (M3) et 1,41 g/l (M4), soit respectivement 0,058, 0,29 et 1,174 % en poids de platine par rapport à la couche poreuse.

### EXEMPLE 12

Un monolithe permettant un écoulement radial des gaz est obtenu en donnant à une éponge constituée de fibres la forme d'un cylindre creux (section frontale annulaire, diamètre intérieur = 54 mm, diamètre extérieur = 141 mm, longueur = 172 mm). Ce monolithe est préoxydé sous air à 900°C pendant 6 heures, puis enduit par une suspension renfermant 2500g d'alumine gamma préalablement imprégnée par l'équivalent de 4,2 % en poids de cérium et de 1,6 % en poids de fer. Après une calcination à 600°C pendant 2 heures, la teneur de la couche poreuse est de 115 g par litre de catalyseur.

Ce monolithe est alors imprégné par une solution de sel de platine de telle manière que la teneur en métal soit de 0,02 gramme par litre de catalyseur, soit 0,017 % en poids par rapport à la couche poreuse.

Ce catalyseur fibrillaire (F1) est comparé aux catalyseurs préparés sur monolithe métallique.

### EXEMPLE 13 (comparatif)

Trois monolithes métalliques identiques à ceux utilisés dans les exemples 10 et 11 sont enduits par une suspension contenant de l'alumine non imprégnée. La teneur de la couche poreuse est de 120 g par litre pour chaque monolithe.

Un premier monolithe enduit est imprégné avec une solution de nitrate ferrique de façon à obtenir un revêtement contenant 1,2 % de fer (référence M5).

Un deuxième monolithe enduit d'alumine est imprégné par une solution de nitrate céreux de telle manière que la teneur en cérium dans la couche poreuse soit de 4% poids(référence M6).

Ces deux monolithes M5 et M6, ainsi que le troisième (M7) enduit d'alumine seule, sont alors imprégnés avec une solution de platine afin de déposer sur chaque catalyseur 0,035 g de platine par litre de catalyseur (soit 0,029 % en poids par rapport à la couche poreuse).

### EXEMPLE 14:Evaluation des catalyseurs sur banc moteur

Les catalyseurs M1 à M7 et F1 sont testés sur banc moteur avec un moteur à injection directe de véhicule utilitaire (cylindrée : 2500 cm3, puissance : 85 kW) fonctionnant avec un gazole contenant 500 ppm de soufre. Ce moteur possède la particularité d'émettre des particules dites sèches, c'est à dire des particules dans lesquelles la fraction soluble dans le dichlorométhane est faible (de 25 % à 35% poids des particules massiques).

Les catalyseurs sont montés dans une enveloppe métallique et installés sur la ligne d'échappement à environ 1 m du moteur.

L'évaluation des catalyseurs est effectuée par détermination de la conversion des polluants à haute température et à des régimes moteur différents. Les points de fonctionnement choisis correspondent aux modes 6 et 8 du cycle 13 modes utilisé dans la procédure européenne (cycle ECE R 49). Les températures à l'entrée du catalyseur pour ces deux points de fonctionnement sont de 450°C et 550°C et les vitesses volumiques horaires sont très élevées: 110 000 h⁻¹ et 180 000 h⁻¹.

Les émissions de polluants sont déterminées par un analyseur à infra-rouge pour le monoxyde de carbone, par un détecteur à ionisation de flammes pour les hydrocarbures. La détermination des émissions de particules s'effectue par pesée de la masse de particules récupérées sur un filtre selon la procédure normalisée.

Les résultats obtenus avec ces catalyseurs sont regroupés dans le tableau 4 et montrent que les catalyseurs selon l'invention permettent de diminuer les émissions de particules même à hautes températures, alors que l'utilisation d'un catalyseur de l'art antérieur, provoque leur augmentation (conversion négative).

Par ailleurs, les conversions de CO et des hydrocarbures restent élevées en dépit d'une diminution de la teneur en platine, et ceci surtout lorsque ces catalyseurs contiennent également du fer et du cérium.

Ces résultats obtenus sur un moteur de véhicule utilitaire mettent en évidence l'effet bénifique sur l'élimination des trois polluants considérés, de l'ajout simultané de fer et de cérium dans le cas de catalyseur contenant de faibles teneurs en platine.

**TABLEAU 4**

| **Catalyseur** | **Teneur en Ce (%)** | **Teneur en Fe (%)** | **Teneur en Pt (g/l)** | **Conversion à 450°C (%)** | | | **Conversion à 550°C (%)** | | |
|---|---|---|---|---|---|---|---|---|---|
| | | | | **2000 tr/min - VVH = 110 000h**^{**-1**} | | | **3700 tr/min-VVH = 180000** h⁻¹ | | |
| | | | | **CO** | **C3H6** | **Particules** | **CO** | **C3H6** | **Particules** |
| **M1** | 3,9 | 1,05 | 0,035 | 71 | 58 | 15 | 83 | 43 | 17 |
| **M2** | 3,9 | 1,05 | 0,07 | 78 | 66 | 2 | 85 | 46 | -4 |
| **M3** **(*)** | 3,9 | 1,05 | 0,35 | 85 | 70 | -11 | 87 | 51 | -19 |
| **M4** **(*)** | 3,9 | 1,05 | 1,41 | 88 | 72 | -15 | 91 | 55 | -24 |
| **M5** **(*)** | 0 | 1,2 | 0,035 | 64 | 55 | 7 | 78 | 40 | 8 |
| **M6** **(*)** | 4 | 0 | 0,035 | 66 | 54 | 8 | 79 | 41 | 8 |
| **M7** **(*)** | 0 | 0 | 0,035 | 62 | 51 | 5 | 75 | 39 | 6 |
| **F1** | 4,2 | 1,6 | 0,02 | 65 | 53 | 19 | 78 | 36 | 18 |

| | | | | | | | | | |
|---|---|---|---|---|---|---|---|---|---|
| (*) comparaison | | | | | | | | | |

### EXEMPLE 15

Un monolithe céramique d'un volume de 8 litres, présentant 62 cellules par cm², est immergé dans une suspension afin de déposer en plusieurs étapes l'équivalent de 150 g de couche poreuse par litre de catalyseur. Cette couche poreuse contient 94% poids d'alumine, 4 % de cérium et 2% de fer.

Le monolithe enduit (C13) est mis en contact avec une solution de sel de platine afin de déposer l'équivalent de 0,040 g de métal par litre de catalyseur (soit 0,033 % en poids par rapport à la couche poreuse).

### EXEMPLE 16 (comparatif)

Trois monolithes céramiques d'un volume de 8 litres identiques au précédent sont enduits selon l'exemple 15, puis imprégnés avec différentes solutions de platine de façon à déposer l'équivalent de 0,022 g (C14), 0,35 g (C15) et 1,75 g (C16) de platine par litre de catalyseur, soit respectivement 0,018, 0,29 et 1,46 % en poids par rapport à la couche poreuse.

### EXEMPLE 17 : Evaluation des catalyseurs sur banc moteur

Les catalyseurs référencés C13 à C16 sont testés sur banc moteur selon la procédure décrite dans l'exemple 14 mais avec un moteur à injection directe de type poids lourds (Cylindrée 10 litres, puissance : 250 kW) produisant des particules dites humides (fraction soluble dans le dichlorométhane > 50 % poids des particules).

Le tableau 5 regroupe les résultats obtenus avec cette série de catalyseurs. Ces catalyseurs sont évalués en comparant les conversions de CO, des hydrocarbures et des particules déterminées aux 2 points de fonctionnement choisis. Afin d'estimer l'activité du catalyseur en oxydation du dioxyde de soufre, la fraction de sulfates présents sur les particules a été déterminée par extraction en milieu aqueux.

**TABLEAU 5**

| **Catalyseur** | **Teneur en Ce (%)** | **Teneur en Fe (%)** | **Teneur en Pt (g/l)** | **T°C= 450°C 1200 tr/mn VVH= 110 000 h-1** | | | | **T°C = 550°C 2000 tr/mn VVH= 180 000 h-1** | | | |
|---|---|---|---|---|---|---|---|---|---|---|---|
| | | | | **Conversion %** | | | **Sulfates sur Particules (%)** | **Conversion %** | | | **Sulfates sur Particules (%)** |
| | | | | **CO** | **C3H6** | **Particules** | | **CO** | **C3H6** | **Particules** | |
| **C13** | 4 | 2 | 0,04 | 35 | 37 | 45 | 2,00 | 24 | 35 | 28 | 1,5 |
| **C14** | 4 | 2 | 0,022 | 28 | 32 | 38 | 1,30 | 19 | 26 | 25 | 0,5 |
| **C15** | 4 | 2 | 0,35 | 67 | 72 | 98 | 22,00 | 58 | 63 | 82- | 21 |
| **C16** | 4 | 2 | 1,75 | 88 | 91 | 145 | 26,00 | 72 | 76 | -115 | 24 |

| | | | | | | | | | | | |
|---|---|---|---|---|---|---|---|---|---|---|---|
| (*) comparaison | | | | | | | | | | | |

Avec les catalyseurs selon l'invention, les conversions de particules sont plus élevées que celles obtenues dans l'exemple 14 avec un moteur de plus petite cylindrée. Ceci est dû à une fraction soluble des particules plus élevée (supérieure à 50% en poids) que dans l'exemple 14, cette fraction étant plus facilement oxydable.

Dans le cas des catalyseurs selon l'art antérieur, on note des conversions de particules négatives dues à une augmentation de la masse des particules. Ce phénomène provient de la formation de sulfates due à l'oxydation du dioxyde de soufre.

Les conversions des autres polluants sont plus faibles avec les catalyseurs contenant peu de platine, mais restent à un niveau suffisament élevé pour permettre de satisfaire les normes d'émissions de polluants.

Ces exemples montrent bien l'intérêt des catalyseurs selon l'invention contenant du fer, du cérium et de faibles teneurs en platine qui permettent de limiter la formation de sulfates à haute température en limitant l'oxydation du dioxyde de soufre, d'oxyder une partie des particules et ceci sans diminuer de façon importante l'activité en oxydation du monoxyde de carbone et des hydrocarbures (le propylène, dans le cas présent).

## Revendications

1. Procédé de traitement des gaz d'échappement de moteurs à combustion interne et à allumage par compression, dans lequel on fait passer lesdits gaz d'échappement au contact d'un catalyseur comprenant un support comprenant une couche poreuse qui comprend elle-même au moins un oxyde inorganique réfractaire et une phase active comprenant au moins du cérium, du fer et du platine, caractérisé en ce que ladite couche poreuse dudit catalyseur comprend en poids :
- de 0,3 à 4,4 % de cérium ;
- de 0,1 à 3,5 % de fer ;
- de 0,0003 à 0,04 % de platine, et
- le complément à 100 % d'au moins un oxyde inorganique réfractaire.

2. Procédé selon la revendication 1, caractérisé en ce que, dans ledit catalyseur, ladite couche poreuse comprend en poids :
- de 0,3 à 4,4 % de cérium ;
- de 0,1 à 2 % de fer ;
- de 0,0035 à 0,03 % de platine, et
- le complément à 100 % d'au moins un oxyde inorganique réfractaire.

3. Procédé selon l'une des revendications 1 et 2 caractérisé en ce que ledit oxyde inorganique réfractaire est choisi dans le groupe formé par l'alumine alpha, l'alumine gamma, l'alumine delta, l'alumine éta, l'alumine thêta, l'alumine kappa, l'alumine khi, la silice, les silices-alumines, les zéolithes, l'oxyde de titane, la zircone et leurs mélanges.

4. Procédé selon l'une des revendications 1 à 3, caractérisé en ce que ladite couche poreuse est sous forme particulaire.

5. Procédé selon l'une des revendications 1 à 3, caractérisé en ce que ladite couche poreuse est déposée sur un substrat métallique ou en matière céramique.

6. Procédé selon la revendication 5, caractérisé en ce que ledit substrat est un matériau de forme monolithique, à structure cellulaire.

7. Procédé selon l'une des revendications 5 et 6, caractérisé en ce que ladite couche poreuse représente une quantité comprise entre 20 et 200 g par litre dudit substrat.

8. Procédé selon l'une des revendications 5 et 6, caractérisé en ce que ladite couche poreuse représente une quantité comprise entre 80 et 150 g par litre dudit substrat.

9. Procédé selon l'une des revendications 5 à 8, caractérisé en ce que la teneur en platine exprimée par rapport au volume total dudit substrat est comprise entre 0,0007 et 0,08 g/l.

10. Procédé selon l'une des revendications 1 à 9 dans lequel on traite les gaz d'échappement de moteurs de véhicules utilitaires de masse totale hors charge supérieure ou égale à 3,5 tonnes.

## Claims

1. A process for the treatment of exhaust gases from a compression ignited internal combustion engine in which said exhaust gases are passed in contact with a catalyst comprising a support including a porous layer which latter includes at least one inorganic refractory oxide and an active phase containing at least cerium, iron and platinum, characterised in that said porous layer of said catalyst comprises by weight :
- 0.3 % to 4.4 % of cerium ;
- 0.1 % to 3.5 % of iron ; and
- 0.0003 % to 0.04 % of platinum ; and
- the complement to 100 % being constituted by at least one inorganic refractory oxide.

2. A process according to claim 1, characterised in that, in said catalyst, said porous layer comprises, by weight :
- 0.3 % to 4.4 % of cerium ;
- 0.1 % to 2 % of iron ; and
- 0.0035 % to 0.03 % of platinum ; and
- the complement to 100 % being constituted by at least one inorganic refractory oxide.

3. A process according to any one of claims 1 and 2, characterised in that the inorganic refractory oxide is selected from the group formed by alpha alumina, gamma alumina, delta alumina, eta alumina, theta alumina, kappa alumina, khi alumina, silica, silicas-aluminas, zeolites, titanium oxide, zirconia and their mixtures.

4. A process according to any one of claims 1 to 3, characterised in that the porous layer is in particulate form.

5. A process according to any one of claims 1 to 3, characterised in that the porous layer is deposited on a metallic or ceramic substrate.

6. A process according to claim 5, characterised in that said substrate is a material of monolithic shape with a cellular structure.

7. A process according to any one of claims 5 and 6, characterised in that said porous layer represents a quantity of between 20 and 200 g/l of said substrate.

8. A process according to any one of claims 5 and 6, characterised in that said porous layer represents a quantity of between 80 and 150 g/l of said substrate.

9. A catalyst according to any one of claims 5 to 8, characterised in that the platinum content, expressed with respect to the total volume of said substrate, is between 0.0007 and 0.08 g/l.

10. A process according to any one of claims 1 to 9 in which exhaust gases from commercial vehicle compression ignition engines with a total unladen weight of 3.5 metric tons or more are treated.

## Patentansprüche

1. Verfahren zur Behandlung der Austrittsgase von Verbrennungskraftmaschinen mit Kompressionszündung, bei dem man diese Austrittsgase in Kontakt mit einem Katalysator strömen läßt, der einen Träger umfaßt, welcher eine poröse Schicht aufweist, die selbst wenigstens ein feuerfestes anorganisches Oxid umfaßt, sowie eine aktive Phase, die wenigstens Cer, Eisen, Platin aufweist, dadurch gekennzeichnet, daß diese poröse Schicht dieses Katalysators in Gewicht umfaßt:
- von 0,3 bis 4,4 % Cer;
- von 0,1 bis 3,5 % Eisen;
- von 0,0003 bis 0,04 % Platin und
- das Komplement auf 100 % wenigstens eines anorganischen feuerfesten Oxids.

2. Verfahren nach Anspruch 1, dadurch gekennzeichnet, daß in diesem Katalysator diese poröse Schicht in Gewicht umfaßt:
- von 0,3 bis 4,4 % Cer;
- von 0,1 bis 2 % Eisen;
- von 0,0035 bis 0,03 % Platin und
- das Komplement auf 100 % wenigstens eines anorganischen feuerfesten Oxids.

3. Verfahren nach einem der Ansprüche 1 und 2, dadurch gekennzeichnet, daß dieses anorganische feuerfeste Oxid gewählt ist aus der Gruppe, die gebildet wird durch Alpha-Aluminiumoxid, Gamma-Aluminiumoxid, Delta-Aluminiumoxid, Eta-Aluminiumoxid, Teta-Aluminiumoxid, Kappa-Aluminiumoxid, Chi-Aluminiumoxid, Siliciumoxid, die Siliciumoxide-Aluminiumoxide, die Zeolithe, Titanoxid, Zirkon und deren Gemische.

4. Verfahren nach einem der Ansprüche 1 bis 3, dadurch gekennzeichnet, daß diese poröse Schicht in Partikelform vorliegt.

5. Verfahren nach einem der Ansprüche 1 bis 3, dadurch gekennzeichnet, daß diese poröse Schicht auf ein metallisches Substrat oder ein keramisches Material abgeschieden wird.

6. Verfahren nach Anspruch 5, dadurch gekennzeichnet, daß dieses Substrat ein Material monolithischer Form mit zellförmiger Struktur ist.

7. Verfahren nach einem der Ansprüche 5 und 6, dadurch gekennzeichnet, daß diese poröse Schicht eine Menge zwischen 20 und 200 g pro Liter dieses Substrats umfaßt.

8. Verfahren nach einem der Ansprüche 5 und 6, dadurch gekennzeichnet, daß diese poröse Schicht eine Menge zwischen 80 und 150 g pro Liter dieses Substrats umfaßt.

9. Verfahren nach einem der Ansprüche 5 bis 8, dadurch gekennzeichnet, daß der Gehalt an Platin, ausgedrückt bezogen auf das Gesamtvolumen dieses Substrats zwischen 0,0007 und 0,08 g/l, liegt.

10. Verfahren nach einem der Ansprüche 1 bis 9, bei dem man die Austrittsgase von Nutzfahrzeugmotoren mit einer Gesamtmasse ohne Ladung von mehr oder gleich 3,5 Tonnen behandelt.
